# EUROPEAN PATENT APPLICATION

(11) **EP 4 596 332 A1**
(43) Date of publication of application: **06.08.2025**
(21) Application number: 23885487.1
(22) Date of filing: 11.10.2023
(51) Int. Cl.: B60R 21/207, B60N 2/42, B60R 21/233

(54) **VEHICULAR SIDE AIRBAG DEVICE**

(30) Priority: 04.11.2022 JP 2022177331
(71) Applicant: Autoliv Development AB, 44783 Vargarda (SE)
(72) Inventor: KOBAYASHI, Yuto, Yokohama-shi, Kanagawa 222-8580 (JP); SAKURAI, Tsutomu, Yokohama-shi, Kanagawa 222-8580 (JP)
(74) Representative: Müller Verweyen
(86) International application number: PCT/JP2023/036864
(87) International publication number: WO 2024/095724

(57) **Abstract**

**PROBLEM**

To provide a vehicular side airbag device enabling improving occupant restraint performance of the airbag cushion with a simple configuration.

**SOLUTION**

The airbag module 110 of the side airbag device 100 includes an airbag cushion 112 that is in a prescribed stowed form and is attached to the outside of a side frame 108 in the width direction of a seat back 104, an inflator 114 that is attached to the outside of the side frame 108 together with the airbag cushion 112, and an external tether 138 that extends from a connection portion 142 that connects to a rear end portion 140 of the airbag cushion 112, passes over a front edge 148 of the side frame 108, and is connected to the inside of the side frame 108 in the width direction below the rear end portion 140. The external tether 138 is placed in a taut state between the airbag cushion 112 and the side frame 108 when the airbag cushion 112 is expanded and deployed.

## Description

### TECHNICAL FIELD

The present invention relates to a vehicular side airbag device for restraining an occupant seated in a vehicle seat.

### BACKGROUND ART

Airbag devices have generally become standard equipment in vehicles in recent years. An airbag device is a safety device which is operated in the event of an emergency such as a vehicle collision, retaining and protecting occupants utilizing an airbag cushion which expands and deploys based on gas pressure. There are various types of airbag devices depending on the installation site and application. For example, an airbag 16 described in FIG. 2A of Patent Document 1 is provided on the interior side on a seatback 14 in the vehicle width direction and provides restraint near a shoulder of the occupant.

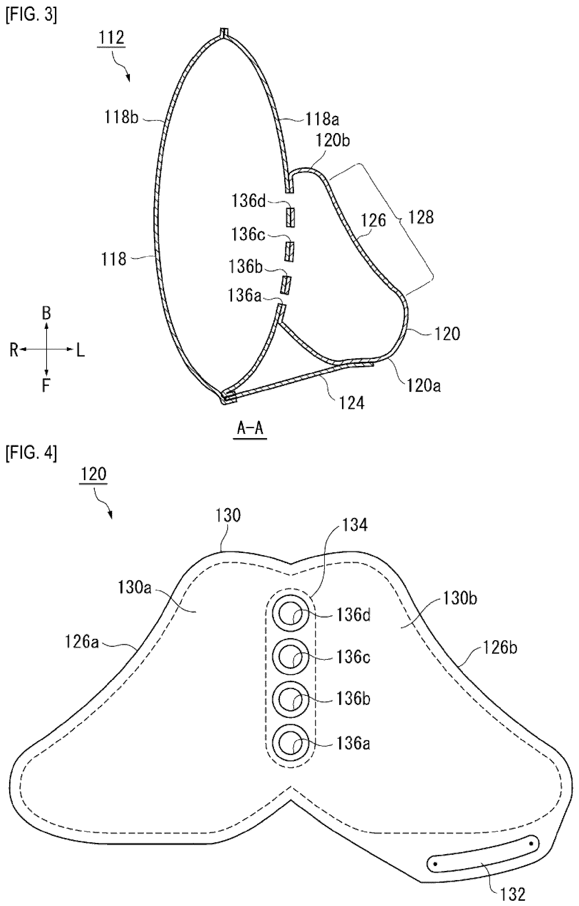

In the technology in Patent Document 1, an upper panel 18 and lower panel 20 are provided on the upper part and lower part of the airbag 16. This upper panel 18 and lower panel 20 are connected to a retractor 52 via a strap 54 and functioning of the retractor 52 enables pulling the airbag 16 to the seatback side. Thereby, as depicted in FIG. 3B, a valley 24 is formed in the airbag 16 between a first portion 64 and a second portion 66 and the valley 24 is able to restrain the shoulder of the occupant.

### RELATED ART DOCUMENTS

### PATENT DOCUMENTS

[Patent Document 1] U.S. Patent No. 10960841 Specification

### SUMMARY OF THE INVENTION

### PROBLEM TO BE SOLVED BY THE INVENTION

Reducing the amount of movement of the occupant is an important evaluation item for lowering injury values of an occupant with an airbag device. In addition to conventional methods of increasing dimensions of the airbag cushion and raising pressure, restricting movement of the airbag 16 using the upper panel 18 and a retractor 52 as in Patent Document 1 can also be used to achieve a reduction in the amount of movement of the occupant. However, the technology using the upper panel 18 or retractor 52 of Patent Document 1 has many elements added to the device configuration, and so may not be adopted due to installation location and cost constraints. Similarly, increasing dimensions or raising pressure of the airbag cushion cannot be easily adopted.

In light of the foregoing, an object of the present invention is to provide a vehicular side airbag device that enables improving occupant restraint performance of the airbag cushion using a simple configuration.

### MEANS FOR SOLVING THE PROBLEM

To resolve the problem described above, a typical configuration of a vehicular side airbag device according to the present invention is a vehicular side airbag device, containing:
a side frame on a side of a seat back of a vehicle seat; and
an airbag module attached to the side frame,
the airbag module including:
   an airbag cushion that is bag-shaped and rolled or folded into a prescribed stowed form and attached to an outer side of the side frame in the width direction of the seat back;
   an inflator attached to the outer side of the side frame together with the airbag cushion; and
   an external tether extending from a prescribed connection portion at a rear end of the airbag cushion, passing over an edge of the side frame, and connected to an inner side of the side frame in the width direction below the connection portion,
   wherein
   the external tether is in a taut state between the airbag cushion, and the side frame when the airbag cushion is expanded and deployed.

According to the configuration described above, the external tether pulls the rear end portion of the airbag cushion toward the side frame, thereby retaining the airbag cushion in a position aligned with the side frame and suppressing the oscillation of the airbag cushion, and improving the occupant restraint performance of the airbag cushion.

The airbag cushion includes a main chamber that expands and deploys from the side frame to the side of an occupant seated in the vehicle seat and a sub-chamber that expands and deploys protruding from the main chamber toward the occupant, wherein the edge of the sub-chamber on the occupant side is curved and concave toward the main chamber.

The airbag cushion described above has an edge of the sub-chamber on the occupant side that is curved and recessed, and is thereby able to provide restraint along the body of the occupant. In addition, with the configuration described above, the sub-chamber is broadly supported by the main chamber, enabling efficient absorption of energy when restraining the occupant. Therefore, for example, with the configuration described above, the head of the occupant can be restrained using the sub-chamber. Rotational behavior of the head is known to raise injury values; therefore, the configuration described above that suppresses rotational behavior of the head using the sub-chamber enables a preferable reduction of the injury value of the occupant with a simple configuration.

The edge of the sub-chamber on the occupant side described above may be curved and concave toward the main chamber.

With the configuration described above, the sub-chamber forming a curved line that is concave enables efficient restraint along the body of the occupant.

The sub-chamber described above may be inclined from the back to the front so that a front-end portion of the sub-chamber is positioned lower than a rear end portion in the front-to-back direction of the vehicle seat.

In an emergency, the torso of the occupant readily falls forward centered on the waist; thereby, the head of the occupant also readily moves forward and downward. With the configuration described above, the sub-chamber being inclined downward to the front enables the sub-chamber to continue to restrain the head of the occupant before and after movement of the occupant during an emergency.

The side frames described above may extend in a direction in which the width of the seat back gradually increases from the rear to the front of the seat back.

According to the configuration described above, even if the side frame of the seat back is shaped to open outward, the airbag cushion can be held in a position aligned with the side frame by using an external tether, thereby improving the occupant restraint performance of the airbag cushion.

The prescribed connection portion described above may be formed along the outer periphery of the upper rear end part of the airbag cushion.

According to the configuration described above, the rear end portion of the airbag cushion can be efficiently pulled toward the side frame by the external tether.

The prescribed connection portion may be a state in which one end of the external tether is sewn to a sewn part at the rear end of the airbag cushion.

With the configuration described above, the rear end portion of the airbag cushion can be efficiently pulled toward the side frame by the external tether.

### [EFFECT OF THE INVENTION]

The present invention can provide a vehicular side airbag device that can improve occupant restraint performance of the airbag cushion with a simple configuration.

### BRIEF DESCRIPTION OF THE DRAWINGS

FIG. 1 is a diagram depicting a vehicular side airbag device according to an embodiment of the present invention.
FIG. 2 is a diagram depicting the airbag cushion of FIG. 1(b) as viewed from various directions.
FIG. 3 is a cross-sectional view of the airbag cushion in FIG. 1(b) along A-A.
FIG. 4 is a diagram depicting a state of the sub-chamber of FIG. 2(b) spread out on a flat surface.
FIG. 5 is a diagram depicting the external tether of FIG. 2(a).
FIG. 6 is various cross-sectional views of the airbag cushion of FIG. 1(b).
FIG. 7 is a diagram depicting the side airbag device of FIG. 1(b) and an occupant.
FIG. 8 is a diagram depicting a state in which the occupant in FIG. 7(a) moves in an emergency.

### DESCRIPTION OF THE PREFERRED EMBODIMENTS

Preferred embodiments according to the present invention will hereinafter be described in detail with reference to the attached drawings. Dimensions, materials, other specific numerical values, and the like indicated in the embodiments are merely examples for ease of understanding of the invention and do not limit the present invention unless otherwise noted. Note that in the present specification and drawings, elements having essentially identical functions and configurations are labeled with identical symbols in order to omit redundant descriptions, and illustrations of elements not directly related to the present invention are omitted.

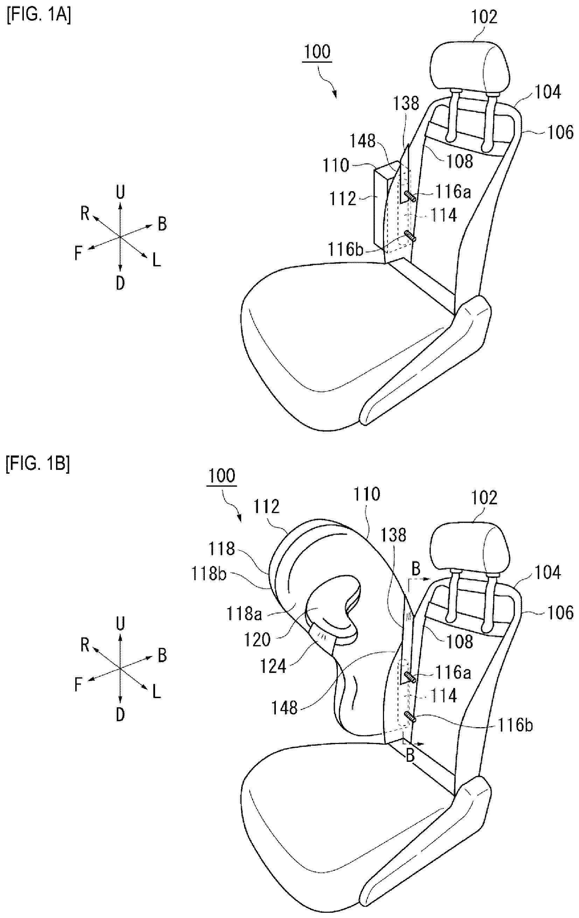

FIG. 1 is a diagram depicting the vehicular side airbag device (hereinafter, side airbag device 100) according to an embodiment of the present invention. FIG. 1(a) is a diagram depicting a state of the side airbag device 100 before activation. In FIG. 1(a) and FIG. 1(b), the side airbag device 100 and a seat 102 on the left side in the front row to which the side airbag device 100 is applied are depicted from the left side of the vehicle in the width direction, in other words from outside (outside vehicle) in the vehicle width direction.

In FIG. 1(a), the skin or seat pad (for example, urethane material) of the seatback 104 of the seat 102 is omitted, and only a seat frame 106 is depicted.

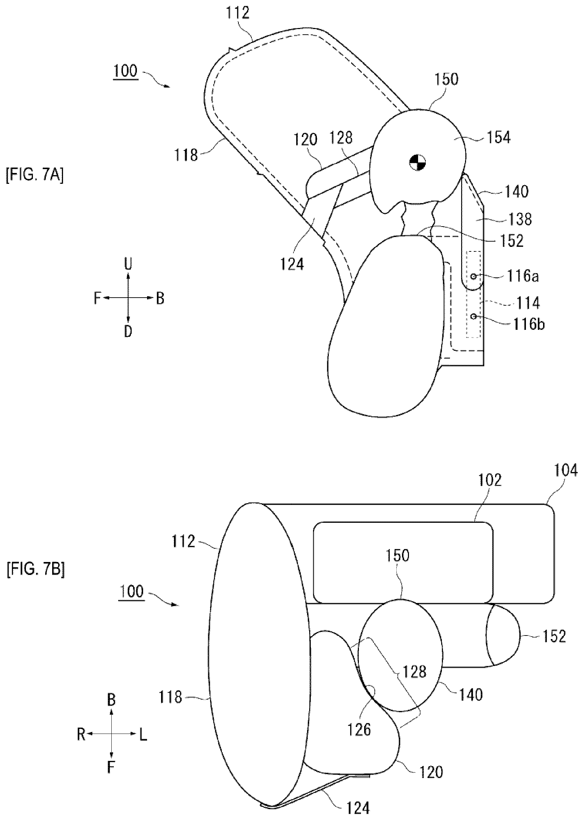

In the present embodiment, when an occupant 150 (see FIG. 7(a)) is sitting in the seat 102 with a regular posture, the direction the occupant 150 is facing is defined as forward, the opposite direction is backward, the right hand side of the occupant 150 is right direction and the left hand side of the occupant 150 is left direction. Furthermore, when the occupant 150 is seated in a regular posture, the direction towards the head of the occupant 150 is referred to as up, and the direction towards the legs of the occupant 150 is referred to as down. Also, in the drawings used in the description below, as necessary, the front, back, left, right, up, and down directions with reference to the occupant 150 in a regular position described above are indicated by arrows F (Forward), B (Back), L (Left), R (Right), U (up), and D (down).

An airbag module 110 includes an airbag cushion 112 that restrains the occupant 150 (see FIG. 7A), and an inflator 114 that supplies gas to the airbag cushion 112.

The seat frame 106 is a skeletal structure member equipped in the seatback 104. A side frame 108 is a part of the seat frame 106 that extends along the left or right-side surfaces of the seat back 104. The airbag module 110 of the present Embodiment is integrated to the side frame 108 of the seat frame 106 from the outer side in the width direction of the seat back 104.

In the present Embodiment, the airbag module 110 is attached to the side frame 108 on the right side in the width direction of the seat back 104. The right side in the vehicle width direction is the side farther from the collision when viewed from the occupant 150 (FIG. 7A) seated in the front row left seat 102, that is, the far side. Conversely, when viewed from an occupant in the seat 102, the left side in the vehicle width direction is the side closer to the collision, that is, the so-called near side. That is, the airbag module 110 is installed on the far side of the seat back 104.

Note that the airbag module 110 can also be attached to the side frame on the left side in the width direction of the seat back 104. That is, the airbag module 110 can be installed on either the far side or the near side of the seat back 104.

The airbag cushion 112 is a bag shaped member that can be expanded by gas and that expands and deploys in an emergency such as when the vehicle is in a collision, thus restraining the occupant 150 seated in the seat 102 (see FIG. 7(a) and the like). Prior to activation, the airbag cushion 112 is stowed in a rolled or folded stored state. In a stowed state, a short cover or the like covers the airbag cushion 112 so the airbag cushion is not visible from the outside.

The inflator 114 is a gas generating device, and in this embodiment, a cylindrical type (cylinder shape) is used. The inflator 114 is encased to the bottom rear of a main chamber 118, described below, of the airbag cushion 112, with the longitudinal direction thereof aligned with the vertical direction of the seatback 104. The inflator 114 is electrically connected to the vehicle side, activates upon receipt of a signal resulting from detection of a collision from the vehicle, and supplies gas to the airbag cushion 112.

Examples of currently prevailing inflators include: types which are filled with a gas generating agent and burn the agent to generate gas; types which are filled with compressed gas and supply gas without generating heat; hybrid types which utilize both combustion gas and compressed gas; and the like. Any of these types can be used for the inflator 114.

The inflator 114 is provided with two stud bolts 116a and 116b, spaced apart in a longitudinal direction thereof. The stud bolts 116a, and 116b penetrate the base fabric of the airbag cushion 112 to be exposed to the outside, and are fastened and fixed to the side frame 108 of the seat back 104. The stud bolts 116a and 116b are fastened to the seatback 104 through the airbag cushion 112, causing the airbag cushion 112 to also be mounted to the seatback 104.

FIG. 1(b) is a diagram depicting a state after expansion and deployment of the airbag cushion 112 of FIG. 1(a). When the side airbag device 100 detects a far side collision via various sensors and a prescribed Electronic Control Unit (ECU), the side airbag device activates the airbag module 110 provided on the far side.

The inflator 114 ejects gas based on an activation signal sent from the ECU described above or the like. The airbag cushion 112 pushes the skin of the seat back 104 out of the way and expands and deploys into the cabin space by using gas from the inflator 114.

The airbag cushion 112 of the present Embodiment is configured to include as sections for restraining the occupant, a wide main chamber 118 and a sub-chamber 120 that protrudes from the main chamber 118 towards the occupant.

The main chamber 118 constitutes a main portion of the airbag cushion 112 and expands and deploys with an overall flat shape. The outer surface of the main chamber 118 includes a main panel 118a positioned on the left side in the vehicle width direction, or the occupant side and a main panel 118b on the right side in the vehicle width direction, or the side opposite the occupant. The main panels 118a and 118b are made from a base fabric and are overall formed in a bag shape by sewing or adhering. Note that main chamber 118 can also be formed using a OPW (One-Piece Woven) textile or the like.

The sub-chamber 120 expands and deploys protruding from above and to the front of the occupant side of the main chamber 118 and protrudes to the occupant side. The sub-chamber 120 of the present Embodiment functions so as to restrain a head 154 of the occupant 150 (see FIG. 7(a)).

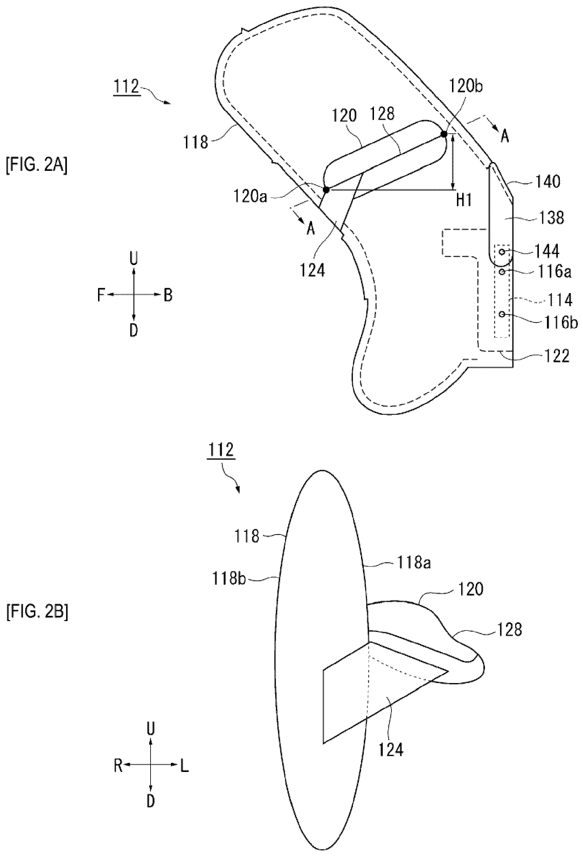

FIG. 2 is a diagram depicting the airbag cushion 112 of FIG. 1(b) as viewed from various directions. FIG. 2(a) is a diagram depicting the airbag cushion 112 of FIG. 1(b) from the occupant's side.

The main chamber 118 has the inflator 114 encased in the bottom rear part thereof and directly receives gas from the inflator 114 for expansion and deployment. A reinforcing cloth 122 and the like are provided near the mounting position of the inflator 114 inside the main chamber 118.

FIG. 2(b) is a diagram illustrating the airbag cushion 112 in FIG. 2(b) from the front. The sub-chamber 120 is supported by the main chamber 118 and is capable of coming into contact with the head 154 of the occupant 150 (see FIG. 7(b)) from obliquely above.

The sub-chamber 120 of FIG. 2(b) uses an external tether 124 to achieve an orientation inclined diagonally downwards. The external tether 124 is a cloth-like member made of the same material as the main panel 118a, and the like, and is stretched across the front side of the sub-chamber 120 and the area of the front side of the main chamber 118 below the sub-chamber 120, pulling the sub-chamber 120 downward and forward.

The sub-chamber 120 in FIG. 2(a) is inclined downward from back to front so that a front-end portion 120a in the longitudinal direction of the seat 102 (see FIG. 1(b)) of the sub-chamber 120 is positioned a distance H1 lower in the up-down direction than a rear end portion 120b. Therefore, a curved part 128, which will be described later, is also formed to incline downward from the rear to the front.

The sub-chamber 120 does not necessarily have to be expanded and deployed in an inclined position, but may be configured to be inflated and deployed by spreading out in the horizontal direction perpendicular to the up-down direction.

FIG. 3 is a cross-sectional view of the airbag cushion 112 in FIG. 1(b) along A-A. The sub-chamber 120 is connected to the main panel 118a on the occupant side of the main chamber 118, expands, and deploys from the main chamber 118, protruding toward the occupant side.

An edge 126 of the sub-chamber 120 on the occupant side is concave curved toward the main chamber 118 side forming a curved part 128. Here, a front side end part 120a of the sub-chamber 120 has more of a protruding shape to the occupant side (right side in FIG. 7(b)) as compared to a rear side end part 120b. Thus, the curved part 128 is curved so as to gradually curve from back to front toward the occupant side.

FIG. 4 depicts a state of the sub-chamber 120 of FIG. 2(b) spread out on a flat surface. The sub-chamber 120 is formed by folding and overlapping a single panel member 130 and sewing this together with curved edges 126a and 126b.

If the sub-chamber 120 is formed on the left side in FIG. 4, the upper side thereof is formed by an upper area 130a of the panel member 130, and if the sub-chamber 120 is formed on the right side in FIG. 4, the lower side thereof is formed by the lower area 130b. A connecting part 132 that the external tether 124 (see FIG. 2(b)) connects to is provided at the front of the lower area 130b.

A connecting area 134 is formed at the center of the panel member 130. The connecting area 134 is an area for connecting to the main panel 118a (see FIG. 2(a)) and is formed in an oval shape across the center of the panel member 130.

A plurality of gas receiving openings 136a to 136d are provided in the connecting area 134. The gas receiving openings 136a to 136d are connected to the main panel 118a (see FIG. 2(a)) and receive gas flowing from the main chamber 118.

The sub-chamber 120 receives gas from the main chamber 118 (see FIG. 2(a)) via gas receiving openings 136a to 136d, for expansion and deployment. In other words, gas from the inflator 114 is first supplied to the main chamber 118 and then the gas is supplied through the main chamber 118 to the sub-chamber 120. This configuration enables the main chamber 118 and the sub-chamber 120 to suitably expand and deploy using gas from the inflator 114.

FIG. 2(a) is again referred to. The airbag cushion 112 of the present Embodiment also includes another external tether 138. The external tether 138 is connected to an upper part of a rear end portion 140 of the main chamber 118 and serves to pull the rear end portion 140 toward the side frame 108.

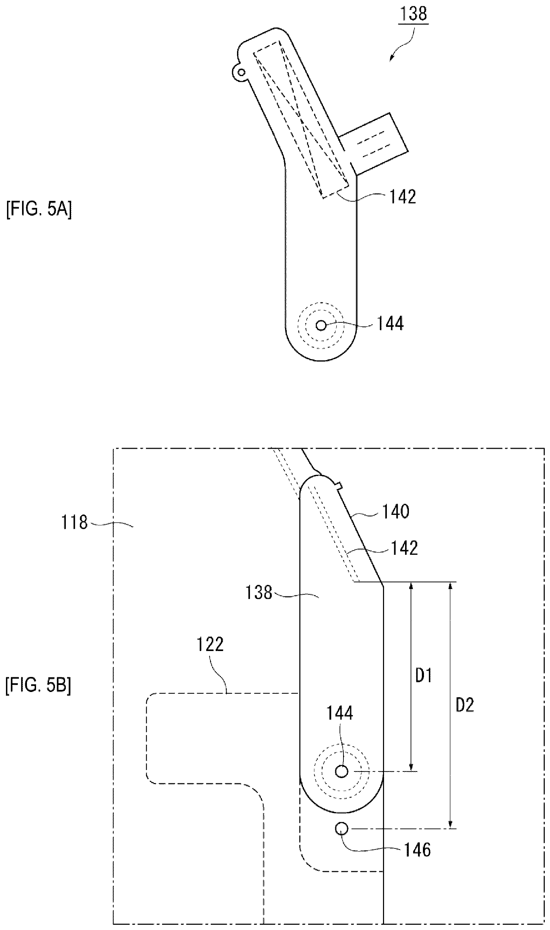

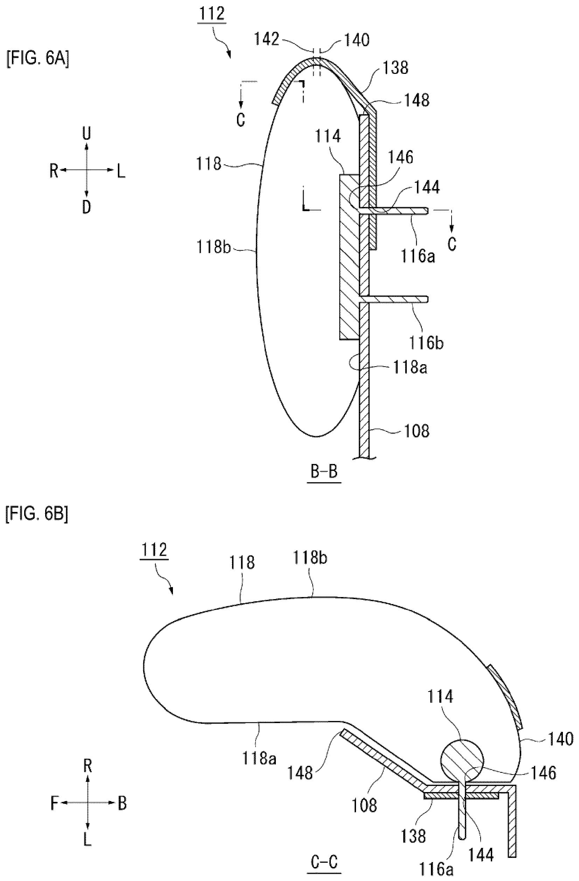

FIG. 5 is a diagram depicting the external tether 138 of FIG. 2(a). FIG. 5(a) is a diagram depicting the external tether 138 independently spread out on a flat surface. The external tether 138 is a cloth-like member made of the same material as the main panel 118a (see FIG. 2(b)), and the like, and a first end thereof is connected to an upper part of the rear end portion 140 of the main chamber 118 (see FIG. 2(a)) by a connecting portion 142, and a second end thereof can be fastened to a stud bolt 116a that passes through the side frame 108 (see FIG. 6(a)), utilizing a bolt hole 144.

FIG. 5(b) is an enlarged view of the external tether 138 of FIG. 2(a). A bolt hole 146 provided in the main chamber 118 is a portion through which the upper stud bolt 116a of the inflator 114 (see FIG. 6(a)) passes and is externally exposed. The bolt hole 144 of the external tether 138 is configured to be hooked onto the stud bolt 116a protruding from the bolt hole 146 in the main chamber 118.

The connection portion 142 is formed along the outer periphery of an upper part of the rear end portion 140 of the main chamber 118 when the airbag cushion 112 is viewed from the vehicle width direction. In addition, the connection portion 142 is provided such that the upper end of the external tether 138 is sewn to the sewn part at the upper part of the rear end portion 140 of the main chamber 118. With this configuration, the external tether 138 can efficiently pull the rear end portion 140 of the main chamber 118 of the airbag cushion 112 toward the side frame 108 (see FIG. 6A).

A distance D1 from the lower end of the connection portion 142 of the external tether 138, which is connected to the rear end portion 140 of the main chamber 118, to the bolt hole 144 is set shorter than a distance D2 from the lower end of the connection portion 142 in the main chamber 118 to the bolt hole 146 (D1 < D2). This configuration enables the external tether 138 to pull the rear end portion 140 of the main chamber 118 inward in the vehicle width direction, in other words, downward towards the occupant.

FIG. 6 provides various cross-sectional views of the airbag cushion 112 of FIG. 1(b). FIG. 6(a) is a cross-sectional view of the airbag cushion 112 in FIG. 1(b) along line B-B.

The airbag cushion 112 and the inflator 114 are attached to the outer side of the side frame 108 in the vehicle width direction. At this time, as depicted in FIG. 1A, a front edge 148 of the side frame 108 is configured to be inclined so as to extend from the upper portion to the lower portion toward the front of the vehicle.

As depicted in FIG. 6(a), the external tether 138 extends from an upper part of the rear end portion 140 of the main chamber 118, passes over the front edge 148 of the side frame 108 from above, extends downward, and is hooked onto and secured to the stud bolt 116a at a position below the rear-end portion 140. This enables the external tether 138 to pull the rear-end portion 140 of the main chamber 118 downward and inward toward the side frame 108 over the front edge 148.

FIG. 6(b) is a cross-sectional view of the airbag cushion 112 of FIG. 6(a) along the line C-C. The side frames 108 of the seat 102 (see FIG. 1(a)) employed in the present Embodiment are configured to extend in a direction that gradually broadens the width of the seat back 104 from the rear to the front of the seat back 104, in other words, outward in the width direction of the seat back 104.

The external tether 138 is placed in a taut state between the airbag cushion 112 and the side frame 108 when the airbag cushion 112 is expanded and deployed. According to this configuration, the external tether 138 pulls the rear end portion 140 of the airbag cushion 112 toward the side frame 108, thereby retaining the airbag cushion 112 in a position aligned with the side frame 108 and suppressing the oscillation of the airbag cushion 112, and improving the occupant restraint performance of the airbag cushion 112.

In particular, with the configuration described above, even if the side frame 108 of the seat back 104 is shaped to open outward, and even if there is no other structure supporting the main chamber 118 from the opposite side of the seat 102, the airbag cushion 112 can be maintained in a position aligned with the side frame 108 by utilizing the tension of the external tether 138, thereby improving the occupant restraint performance of the airbag cushion 112.

FIG. 7 is a diagram depicting the side airbag device 100 of FIG. 1(b) and an occupant 150. FIG. 7(a) depicts the side airbag device 100 as viewed from the occupant side in the vehicle width direction. The occupant 150 in FIG. 7(a) is depicted as a test dummy doll AM50 which imitates a physique (height of 175 cm and weight of 78 kg) corresponding to the 50th percentile of adult males in the US.

As described above, the main chamber 118 expands and deploys to the side of the occupant 150. Furthermore, the sub-chamber 120 is provided on the occupant side of the main chamber 118 and is positioned so that upon expansion and deployment, the lower region 130 thereof is above the height of a shoulder 152 of the occupant 150. With this configuration, the sub-chamber 114 is able to restrain the head 154 of the occupant 150.

FIG. 7(b) depicts the side airbag device 100 from above the seat 102. Utilizing the curved part 128, the sub-chamber 120 is able to contact the head 154 of the occupant 150 from the side to the front. Restraint of the head 154 of the occupant 150 by the curved part 128 of the sub-chamber 120 prevents forward movement on the far side and suppresses rotation around the neck.

In the airbag cushion 112, the occupant-side edge 126 of the sub-chamber 120 is recessed in a curved shape, so the occupant 150 can be restrained in a manner that conforms to the body of the occupant. In addition, the sub-chamber 120 is broadly supported by the main chamber 118, and can efficiently absorb energy when an occupant is restrained. Therefore, for example, the sub-chamber 120 can be used to restrain the head 154 of the occupant 150. Rotational behavior of the head 154 is known to raise injury value; therefore, the configuration described above suppressing rotational behavior of the head 154 using the sub-chamber 120 enables preferable reduction of the injury value of the occupant 150 with a simple configuration.

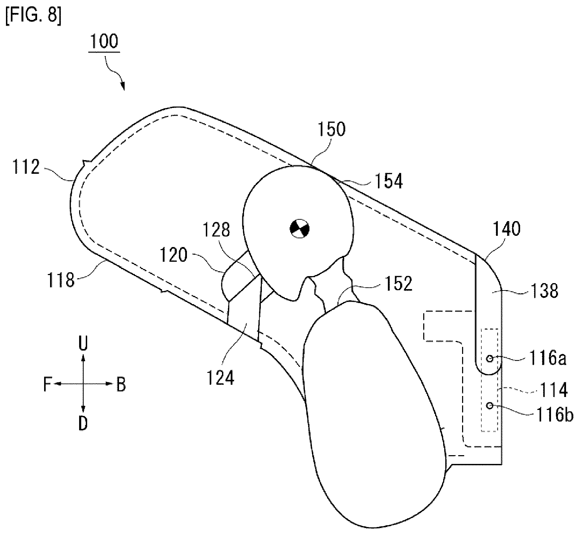

FIG. 8 is a diagram illustrating a state in which the occupant 150 in FIG. 7(a) moves in the event of an emergency. In an emergency, the torso of the occupant 150 readily falls forward centered on the waist; thereby, the head 154 also readily moves forward and downward.

As described above, the sub-chamber 120 protrudes inclined downward in the left-to-right direction of the seat 102 (see FIG. 1(b)) from the main chamber 118 on the occupant 150 side and is also inclined downward in the front-to-back direction from the back to the front. With this manner of configuration, the sub-chamber 120 comes into contact with the head 154 of the occupant 150 from above enabling a behavior of the front of the curved part 128 falling in front of and capturing the head 154.

With the configuration of the present Modified Example, the sub-chamber 120 is below the occupant side and inclined downward to the front, and so the head 154 of the occupant 150 can be restrained by the sub-chamber 120 before and after movement of the occupant 150 during an emergency. In particular, utilizing the curved part 128, the sub-chamber 120 is able to come into contact with the head 154 of the occupant 150 from the side to the front and thereby is suitably able to suppress rotation of the head 154 around the neck. Therefore, with this modified example, injury value of the occupant 150 can be suitably reduced by suppressing rotational behavior of the head 154 of the occupant 150 with a simple configuration.

In addition, in the present Embodiment, the description is provided based on the airbag cushion 112 being provided on the far side of the seatback 104. Providing of the airbag cushion 112 on the far side of the seatback 104 enables suitable restraint of the occupant 150 moving to the far side during a collision. However, of course the airbag cushion 112 can be provided on the near side of the seatback 104, and, in this case as well, the main chamber 118 and the sub-chamber 120 can be used to suitably restrain the occupant 150 (see FIG. 7(a)).

Preferred examples of the present invention were described above while referring to the attached drawings. However, the embodiments described above are preferred examples of the present invention, and other embodiments can be implemented or performed by various methods. In particular, unless described otherwise in the specification of the present application, the invention is not limited to the shape, size, configurational disposition, and the like of parts illustrated in detail in the attached drawings. Furthermore, expressions and terms used in the specification of the present application are used for providing a description, and the invention is not limited thereto, unless specifically described otherwise.

Therefore, a person of ordinary skill in the art could obviously conceive of various changed examples or modified examples within the scope described in the scope of the claims, which is understood to naturally belong to the technical scope of the present invention.

### [INDUSTRIAL APPLICABILITY]

The present invention can be used for a vehicle side airbag device that restrains an occupant seated in a vehicle seat.

### [EXPLANATION OF CODES]

100. Side airbag device, 102. Seat, 104. Seatback, 106. Seat frame, 108. Side frame, 110. Airbag module, 112. Airbag cushion, 114. Inflator, 116a, 116b. Stud bolts,118. Main chamber, 118a, 118b. Main panel, 120. Sub-chamber, 120a. Front end portion, 120b. Rear end portion, 122. Reinforcing cloth, 124. External tether, 126. Edge, 128. Curved part, 130. Panel member, 130a. Upper area, 130b. Lower area, 132. Connecting part, 134. Connecting area, 136. Occupant, 136a to 136b. Gas receiving opening, 138. External tether, 140. Rear end portion, 142. Connecting part, 144. Bolt hole, 146. Bolt hole, 148. Front edge, 150. Occupant, 152. Shoulder, 154. Head, D1, D2. Distance, H1. Distance.

## Claims

1. A vehicular side airbag device, comprising:
a side frame on a side of a seat back of a vehicle seat; and
an airbag module attached to the side frame,
the airbag module including:
an airbag cushion that is bag-shaped and rolled or folded into a prescribed stowed form and attached to an outer side of the side frame in the width direction of the seat back;
an inflator attached to the outer side of the side frame together with the airbag cushion; and
an external tether extending from a prescribed connection portion at a rear end of the airbag cushion, passing over an edge of the side frame, and connected to an inner side of the side frame in the width direction below the connection portion,
wherein
the external tether is in a taut state between the airbag cushion and the side frame when the airbag cushion is expanded and deployed.

2. The vehicular side airbag device according to claim 1, wherein the airbag cushion includes a main chamber that expands and deploys from the side frame to the side of an occupant seated in the vehicle seat and a sub-chamber that expands and deploys protruding from the main chamber toward the occupant, wherein the edge of the sub-chamber on the occupant side is curved and concave toward the main chamber.

3. The vehicular side airbag device according to claim 2, wherein the edge of the sub chamber on the occupant side is formed by a curved surface that is concave towards the main chamber.

4. The vehicular side airbag device according to claim 2, wherein the sub chamber is inclined from the back to the front so that a front-end portion of the sub chamber is positioned lower than a rear end portion in the front-to-back direction of the vehicle seat.

5. The vehicular side airbag device according to any one of claims 1 to 4, wherein the side frame extends in a direction in which the width of the seat back gradually increases from the rear to the front of the seat back.

6. The vehicular side airbag device according to any one of claims 1 to 4, wherein the prescribed connecting portion is formed along the periphery of a rear end upper part of the airbag cushion.

7. The vehicular side airbag device according to any one of claims 1 to 4, wherein the prescribed connection portion is in a state in which a first end of the external tether is sewn to a sewn part at a rear end of the airbag cushion.
